# EUROPÄISCHE PATENTANMELDUNG

(11) **EP 1 921 574 A1**
(43) Veröffentlichungstag der Anmeldung: **14.05.2008**
(21) Anmeldenummer: 06023144.6
(22) Anmeldetag: 07.11.2006
(51) Int. Cl.: G06Q 10/00, G06F 3/03

(54) **Verfahren zur vereinfachten Datenerhebung von Prüfprozessen in einem Unternehmen / einer Organisation**

(71) Anmelder: EURO-LOG AG, 85399 München-Halbergmoos (DE)
(72) Erfinder: Fürbacher, Jörg, 85053 Ingolstadt (DE)
(74) Vertreter: Thun, Clemens

(57) **Zusammenfassung**

Bei einem Verfahren zur Datenerfassung der Ergebnisse bei Prüfprozessen, bei dem zunächst ein in Papierform vorliegender Prüfungsbeleg bereitgestellt wird, anschließend die Prüfung durchgeführt und das Prüfergebnis auf dem Prüfungsbeleg eingetragen werden, und schließlich die auf dem Prüfungsbeleg eingetragenen Informationen an eine zentrale Einrichtung übermittelt werden, wird der Prüfungsbeleg in Form eines digitalen Papiers erstellt. Die Prüfergebnisse werden mit Hilfe eines digitalen Stifts eingegeben, wobei die eingetragenen Informationen über den digitalen Stift an die zentrale Einrichtung übermittelt werden.

## Beschreibung

Die vorliegende Erfindung betrifft ein Verfahren zur vereinfachten Erhebung der Daten von Prüfprozessen in einem Unternehmen bzw. in einer Organisation. Ein Anwendungsbeispiel für die vorliegende Erfindung stellt die Erfassung von Daten im Rahmen des Waren- oder Güterverkehrs dar.

Die Erfassung und Bewertung der Ergebnisse von Prüfprozessen spielt beispielsweise in der Qualitätssicherung oder in der Logistik des Waren- und Güterverkehrs eine zentrale Rolle. Nur wenn die Informationen bezüglich des aktuellen Standorts der Waren / Güter vollständig und aktualisiert vorliegen, können vorhandene Lager- und Transportkapazitäten effektiv genutzt und gleichzeitig die Anforderungen der an dem Waren- / Güterverkehr beteiligten Parteien (z.B. Liefertermine) zuverlässig erfüllt werden.

Zentrales Problem hierbei ist es, die sich beim Warentransport ergebenden Informationen - beispielsweise die Information, an welchem Ort sich aktuell eine angeforderte Ware befindet - zeitnah allen Personen oder Einrichtungen zur Verfügung zu stellen, welche von diesen Informationen betroffen sind. In klassischer Weise werden diese Informationen im Rahmen definierter Kontrollen bzw. sog. Prüfprozesse ermittelt, wobei in einem derartigen Prüfprozess dann beispielsweise festgestellt wird, ob und wann die Ware eine bestimmte Nahtstelle des Transportablaufs durchlaufen hat. Die hierbei erhaltenen Daten bzw. Informationen müssen dann an die entsprechenden Stellen weitergeleitet werden.

Das Weiterleiten der im Rahmen eines Prüfprozesses gewonnenen Informationen stellt heutzutage aufgrund der vielfältigen Kommunikationsmöglichkeiten zwar ein verhältnismäßig kleines Problem dar, allerdings muss trotz allem zunächst sichergestellt werden, dass die Ergebnisse der Prüfprozesse möglichst fehlerfrei und umgehend an eine entsprechende Kommunikationseinrichtung übermittelt werden. Auch hierbei können zwar bestimmte Daten durchaus mit Hilfe elektronischer Systeme (beispielsweise durch den Einsatz von Scannern oder RFID-Transpondern) erfasst werden, in der überwiegenden Anzahl der Prüfprozesse ist allerdings bislang nach wie vor zumindest eine menschliche Entscheidung bzw. manuelle Kontrolle und Eingabe der Daten erforderlich. Dabei hat sich gezeigt, dass derzeit bei aufeinander folgenden Prüfprozessen oftmals eine Vielzahl von Informationen wiederholt eingegeben wird, was einerseits mit einem hohen Aufwand verbunden ist, andererseits allerdings auch zu Fehlern in der Datenerhebung führen kann.

Das oben geschilderte Problem ist dabei nicht nur auf das Beispiel des Warentransports beschränkt sondern tritt allgemein dann auf, wenn in einem Prozessablauf aufeinander folgende Prüfprozesse durchzuführen sind.

Der vorliegenden Erfindung liegt deshalb die Aufgabe zugrunde, die Abläufe der Datenerhebung bei Prüfprozessen zu vereinfachen.

Diese Aufgabe wird durch ein Verfahren mit den Merkmalen des Anspruchs 1 gelöst. Vorteilhafte Weiterbildungen des erfindungsgemäßen Verfahrens sind Gegenstand der anhängigen Ansprüche.

Erfindungsgemäß wird dementsprechend ein Verfahren zur Datenerfassung der Ergebnisse von Prüfprozessen vorgeschlagen, wobei das Verfahren die folgenden Schritte aufweist:
a) Bereitstellung eines in Papierform vorliegenden Prüfungsbelegs,
b) Durchführung der Prüfung und Eintragung des Prüfergebnisses auf dem Prüfungsbeleg und
c) Übermittlung der auf dem Prüfungsbeleg eingetragenen Informationen an eine zentrale Einrichtung,
und wobei erfindungsgemäß vorgesehen ist, dass der - vorzugsweise auf Basis von vorauseilenden Informationen erstellte - Prüfungsbeleg in Form eines digitalen Papiers erstellt wird und die Prüfergebnisse mit Hilfe eines digitalen Stifts eingegeben werden. Die eingetragenen Informationen werden ferner über den digitalen Stift an die zentrale Einrichtung übermittelt.

Die erfindungsgemäße Lösung beruht auf einer synergistischen Zusammenführung bekannter Techniken, durch welche die Datenerhebung in Prüfprozessen und die Weiterleitung der hierbei gewonnenen Informationen besonders einfach und zuverlässig gestaltet wird. So werden bei dem erfindungsgemäßen Verfahren mit Hilfe vorauseilender Informationen und dem Einsatz des digitalen Stiftes über eine standardisierte automatische Schnittstelle die eindeutig identifizierbaren Bewegungsdaten (z.B. im Falle des Warentransports die Lieferscheindaten) in einer Datenbank gespeichert. Ebenfalls werden über die automatische Schnittstelle die Stammdaten von Formularen gespeichert, welche unter Nutzung eines sog. digitalen Papiers erstellt wurden. Dieses digitale Papier beruht beispielsweise auf der bekannten Anoto-Technologie, wobei die Stammdaten der verwendeten Anoto-Technologie ebenfalls in der Datenbank gespeichert sind. Alternativ können diese (Stamm-)Daten auch über ein Nutzerinterface im System vorgegeben worden.

Unter Nutzung eines eingesetzten Formulareditors werden Formularvorlagen erstellt, abgespeichert und verwaltet. Durch den Druck der Formulare entsteht ein sehr übersichtlicher Prüfbeleg (z.B. Wareneingangsschein), der zeilenorientiert die notwendigen Bewegungsdaten auflistet und die logischen Entscheidungsalternativen (ergänzende Informationen) "o.k." sowie "nicht o.k." mit entsprechenden Statusinformationen wie Angabe einer Anzahl oder Textinformationen wie einen Kommentar enthält. Aufgrund der unterlegten Identifizierungsmethode des verwendeten digitalen Papiers kann sehr einfach und ohne Einsatz eines Barcodes eine eindeutige Erkennung des gedruckten Prüfbeleges erfolgen. Den einzelnen Zeilen des Prüfbeleges sind dabei im zentralen System die vollständigen Datensätze der dahinter liegenden vorauseilenden Informationen hinterlegt. Ein Prüfbeleg kann dabei mehrere Zeilen eines vollständigen oder teilweisen Prüfungsbereiches (z.B. vollständige Lieferung oder Teillieferung eines bestimmten Lieferanten) oder auch mehrere Zeiten von unterschiedlichen Prüfungsbereichen (z.B. Wareneingang aus vollständigen Lieferungen und Teillieferungen von mehreren Lieferanten) enthalten.

Mit Hilfe eines digitalen Stiftes werden dann die Ergebnisse der Entscheidungsalternativen bzw. der entsprechenden Statusinformationen und die Textinformationen eines Prüfbeleges an eine Datenbank übertragen und dort gespeichert. Somit erfolgt umgehend die elektronische Datenübertragung der auf dem Papier eingegebenen Informationen und die Zuordnung der hierzu in der zentralen Datenbank hinterlegten Daten.

Für den Vorgang der Identifikation der Antworten und zur Messung aufgewendeter Zeit und Reihenfolge der realisierten schriftlichen Ergebnisse des Prüfprozesses aus dem Prüfbeleg werden also am Markt verfügbare Systeme zur online Erfassung der Vektoren von Schreibegeräten auf speziell bedruckbaren Papier (Anoto-System) mit eindeutigen Mustern eingesetzt werden, auf denen die Informationszeilen gedruckt wurden. Mit diesem Verfahren werden die Zuordnung aller Antworten, die Zeiten und die Reihenfolge der Beantwortung zu einer Satzerkennung in der Datenhaltung im Zentralsystem bereitgestellt.

Im zentralen System werden dann die übermittelten Antworten decodiert und so in der Datenbank gespeichert, dass daraus sofort die vollständig korrekten Bewegungsdaten ("o.k.") und die weiter zu bearbeitenden Daten ("nicht o.k," mit einer evtl.

Statusinformation und/oder der Textinformationon) abgeleitet werden können. In einem weiteren Bewertungsverfahren werden dann die vollständig korrekten Prüfprozesse eines Prüfungsbereiches (z.B. Lieferung eines Lieferanten aus einem Wareneingang) und die nachzuarbeitenden Prüfprozesse identifiziert.

Die vollständig korrekten Prüfprozesse (eines oder mehrerer Prüfbereiche) stehen in der Datenbank für eine weitere Datenübertragung an ein Folgesystem zur Verfügung oder können mit einem Informationssystem in Form von Prüfberichten angezeigt werden. Es kann in diesem Schritt auch vorgesehen werden, dass die Daten erst dann zur Weiterverarbeitung zur Verfügung stehen, wenn alle Datensätze eines Prüfbereiches vollständig zur Verfügung stehen. In diesem können beispielsweise aufgrund des Prüfprozesses die kaufmännischen Konsequenzen initiiert werden (durch die Bereitstellung über die Schnittstelle). Beispielsweise kann durch einen vollständigen Prüfprozess wie Wareneingang eines Lieferanten die Freigabe oder teilweise Freigabe der Rechnung eines Lieferanten erfolgen.

Bei der Eingabe von ergänzenden Informationen (Statusinformationen und/oder Textinformationen) und/oder einer "nicht o.k." Kennzeichnung werden der gesamte Datensatz inklusive der sonstigen Ergänzungen an eine internetbasierte Anwendung zur Verfügung gestellt. In dieser Anwendung können vom Nutzer die realisierten Eingaben (als Bilddarstellung) den geplanten Eingaben gegenüber gestellt werden.

Ein besonderer Vorteil der vorliegenden Erfindung besteht darin, dass bei dem erfindungsgemäßen Verfahren ein vollständiger Eingabebeleg für eine optische Kontrolle vorliegt. Aufgrund der realisierten sonstigen Ergänzungen wird vom Nutzer nur der finale Wert für die Eingabegrößen (z.B. tatsächliche Mengen eines Artikels oder Qualitat der Artikel) eingegeben und damit ein vollständiger und evtl. geänderter Datensatz erstellt. Die so erstellen Datensätze stehen unmittelbar in der Datenbank für eine weitere Übertragung an ein Folgesystem zur Verfügung oder können mit einem Informationssystem angezeigt und den beteiligten Parteien zur Verfügung werden.

In einem nachfolgenden Schritt ist es ferner auch möglich, die elektronisch übertragenen Vektoren einer OCR-Erkennung zu unterziehen und auch die Ergebnisse dieser elektronischen Umwandlung dem Nutzer für eine finale Freigabe online zur Verfügung zu stellen. Eventuelle Programme für die OCR-Erkennung sind bereits aus dem Stand der Technik bekannt und können ohne weiteres in das Gesamtverfahren einfach integriert werden. Alternativ dazu ist es allerdings auch möglich, bei bestimmten sonstigen Ergänzungen ganz auf eine Onlinebearbeitung zu verzichten und die Daten gleich für die weitere Verarbeitung zur Verfügung zu stellen.

Die erfindungsgemäße Verfahrensführung beim Erstellen, Verwenden, Ausfüllen und weiteren Verarbeiten der Prüfbelege ermöglicht also die elektronische Erfassung von Daten von Prüfprozessen mit einem geringstmöglichen Aufwand, da bereits vorliegende vorauseilenden elektronische Informationen vollständig genutzt werden können. Das in der Praxis sehr stark ausgeprägte vielfache Erfassung von bereits vorliegenden Daten kann damit wirksam und mit geringen Investitionen umgangen werden. Weiterhin werden durch das gewählte Verfahren der Prozessablauf nur minimal geändert und die Vorteile einer Papiererfassung beibehalten, wobei gleichzeitig allerdings auch die elektronischer Datenübertragung realisiert werden kann. Damit ist auch eine minimale Störanfälligkeit des manuellen Prüfprozesses gegeben. Das Verfahren kann weiterhin ergänzend zur vollelektronischen Datenerfassungen (wie z.B. RFID-Erfassung) eingesetzt werden und dort die Schwachstellen in der Lesefähigkeit bestmöglich unterstützen. Durch die standardisierten Schnittstellen kann das Verfahren einfach in Ergänzung zu bestehenden 1T-Landschaften eingesetzt werden und ist in der Lage unterschiedlichste digitale Stifte anzubinden.

Ferner können durch die vorhandenen Systeme Änderungen an Formularen und Weitergabeprozeduren in einfacher Weise online durch die Nutzer vorgenommen werden.

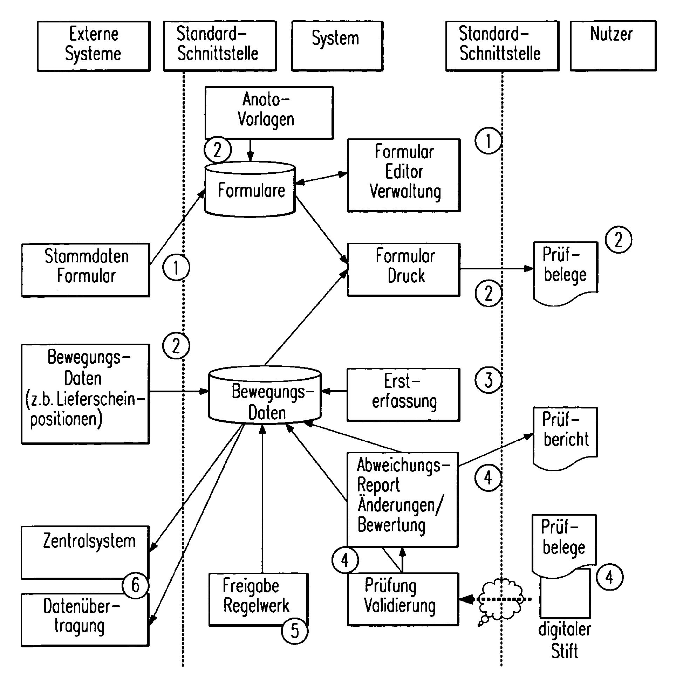

Nachfolgend soll die Erfindung anhand der beiliegenden Zeichnung näher erläutert werden, wobei die einzige Figur schematisch das Gesamtsystem mit den wesentlichen Inhalten und den Prozessschritten des erfindungsgemäßen Verfahrens zeigt.

Wie dieser Darstellung entnommen werden kann, beruht das Gesamtkonzept des erfindungsgemäßen Verfahrens auf dem Zusammenwirken einer zentralen Einrichtung, die im Folgenden als System bezeichnet wird, mit einem Nutzer einerseits und mehreren sog. externen Systemen andererseits. Bei diesen externen Systemen kann es sich beispielsweise um Datenverwaltungssysteme des eigenen Unternehmens oder auch anderer Organisationen / Unternehmen oder um Datenbanken handeln, welche Informationen, die für die Durchführung der Prüfprozesse erforderlich sind, zur Verfügung stellen bzw. denen die Ergebnisse der Prüfprozesse übermittelt werden sollen. Als Nutzer wiederum wird eine Person bezeichnet, welche unterstützt durch die zentrale Einrichtung bzw. das System Prüfprozesse durchführt und hierbei Daten eingibt, welche durch das System weiterverarbeitet werden.

Ein Informationsaustausch zwischen dem System und den externen System bzw. dem Nutzer erfolgt dabei über Schnittstellen, welche eine Datenkommunikation ermöglichen. Die Ausgestaltung dieser Schnittstellen wird nachfolgend noch näher beschrieben.

Das System beinhaltet zumindest eine Datenverarbeitungseinrichtung in Form eines PCs, welche über ein oder mehrere Anwenderprogramme die Verwaltung und/oder Erstellung von Daten und/oder Formularen ermöglicht. Ferner weist das System zumindest eine Ausgabeeinrichtung in Form eines Druckers auf, über welche die zur Durchführung der Prüfprozesse benötigten Formulare erstellt werden. Schließlich sind dem System auch Kommunikationsmittel zum Datenaustausch mit den externen System und dem Nutzer zugeordnet.

Die Formulare, welche im Rahmen des erfindungsgemäßen Verfahrens eingesetzt werden, beruhen dabei auf dem Prinzip des sog. digitalen Papiers. Es handelt sich hierbei um Papier, welches mit einem Raster kleiner Punkte bedruckt ist, um handschriftliche Notizen mittels eines Digitalstifts in digitaler Form zu erfassen. Handschriftliche Aufzeichnungen auf digitalem Papier können auf diese Weise im Digitalstift gespeichert und anschließend an das System übertragen werden. Ein bekanntes Rastersystem, auf dem derartige digitale Papiere basieren, wurde beispielsweise von dem schwedischen Unternehmen Anoto entwickelt. Das Papier ist in diesem Fall mit einem Raster 0,1 mm großer Punkte mit einem Abstand von 0,3 mm bedruckt. Die Lage der einzelnen Punkte variiert geringfügig nach einem bestimmten System, wobei eine Anordnung von 6 mal 6 Punkten eine eindeutige Koordinate auf der Papieroberfläche bildet. Über eine in den Digitalstift integrierte Infrarotkamera, welche sich nur an dem Infrarotstrahlung reflektierenden Punktraster im Hintergrund des Formulars orientiert, können dann Bewegungen des Stifts auf dem Formular nachvollzogen und - z.B. über eine Bluetooth-Verbindung oder eine anderweitige Kommunikations-Schnittstelle - an das System übermittelt werden.

Die einzelnen Prozessschritte des erfindungsgemäßen Verfahrens vollziehen sich dann wie folgt:

### "1" "Vorbereitung - Stammdaten, Formular, Formulareditor und Verwaltung

In diesem ersten Schritt wird auf Basis von sog. Stammdaten, welche beispielsweise extern zur Verfügung gestellt werden, in einem ersten Anwenderprogramm, dem sog. Formular-Editor ein Formular erstellt. Die Formulare können hierbei abhängig von der Art der durchzuführenden Prüfung unterschiedliche Formen annehmen.

Zum einen können dies beispielsweise Formulare mit dem Einbezug von Bewegungsdaten sein, so dass der Prüfprozess auf Basis der erwarteten Bewegungsdaten durchgeführt werden kann. Hier kann beispielsweise ein Wareneingang oder ein Qualitätsprüfprozess abgebildet werden. Durch das Einbringen von Entscheidungsalternativen (logische Ergänzungsfelder wie o.k." oder nicht o.k.") sowie weiteren Informationen (Statusinformationen und/oder Textintormationen wie Zahleneingaben - wie tatsächliche Wareneingangsmenge oder ein reines Bemerkungsfeld) wird der vorauseilende Datenstrom auf die notwendigen Identifikationsfelder bei dem Prüfprozess reduziert. Ergänzt werden können diese Informationen durch hinzugefiigte Bilder aus der Stammdatendatei, die dem Durchführenden des Prüfprozesses die Erkennung vereinfachen.

Die zweite prinzipielle Möglichkeit der Formularerstellung ist auch ohne den Einsatz von Bewegungsdaten möglich. Die hierbei benötigten sog. "reduzierten Stammdaten" können in diesem Fall direkt in dem Formular-Editor hinterlegt werden. Beispielsweise kann hier ein lieferantenbezogener Prüfprozess durchgeführt werden, der nur logische Ergänzungsfelder ("o.k." bzw. "nicht o.k.") enthält. Die erwarteten Sollwerte können in diesem Fall ebenfalls im Formular-Editor hinterlegt werden.

Ein wichtiges Element auf dem Formular ist ferner die einfache Hinterlegung einer Blattidentifikation, die eine Zuordnung des (auch mehrseitigen) Formulars zu dem Anoto-Hintergrund ermöglicht. Diese Identifikation ist insbesondere für den Nutzer sehr einfach durchzuführen.

### "2" Erstellung Prüfbelege - Kombination Anoto-Vorlagen, Formularvorlagen und vorauseilende Informationen (Bewegungsdaten)

Der zweite Schritt der Erstellung der Prüfbelege erfolgt unter Verwendung der mit dem zuvor erläuterten Formular-Editor angelegten Vorlagen und ausgewählter vorauseilender Informationen durch den Nutzer selbst beispielsweise per Webinterface. Alternativ kann die Erstellung bzw. der Ausdruck der Unterlagen auch durch eine koordinierende übergreifende Stelle erfolgen.

Durch die Kombination der Formulare und der Bewegungsdaten mit den Anoto-Vorlagen wird ein eindeutig identifizierbarer Prüfvorgang definiert. Der Druck der Formulare kann beliebig häufig durchgeführt werden, so dass auch Fehldrucke u.ä. keine Auswirkung haben.

Wesentliches Merkmal der Prüfbelege bzw. Formulare ist es, dass nur die tatsächlich für den Prüfprozess notwendigen Informationen im Formular dargestellt werden. Damit wird auch für den Nutzer eine optimale Fokussierung auf den notwendigen Dateninhalt realisiert. Durch die Nutzung bereits erstellter Formularvorlagen kann sehr flexibel auf bestehende Strukturen zurückgegriffen werden.

Mit der dargestellten eindeutigen Identifizierung kann von den einzelnen Zeilen des Prüfbelegs auf den gesamten vollständigen Datensatz referenziert werden (der vorauseilenden Informationen als Summe von Stamm- und Bewegungsdaten).

### "3" - Ergänzende manuelle Eingabe bei fehlenden vorauseilenden Informationen

Im Ausnahmefall wäre es denkbar, dass die notwendigen vorauseilenden Informationen zu dem gewünschten Zeitpunkt noch nicht vorliegen. Im Regelfall wird hier entweder aufgrund der aktuellen mitgeführten Papiere eine Erfassung des Wareneinganges auf vorläufiger Basis durchgeführt und die eigentliche Prüfungsdarstellung erst in einem zweiten Schritt realisiert.

Die zweite Variante des Regelfalles stellt das Anfordern der Bewegungsdaten von den unternehmensinternen Verantwortlichen dar, die diese kurzfristig bereitstellen. Somit kann dann wieder der Normablauf realisiert werden.

Soll jedoch terminkritisch ein Prüfprozess auf Basis des dargestellten Ablaufes realisiert werden, so können die fehlenden notwendigen Informationen (mit einer Konzentration auf die wichtigen Dateninhalte) auch online per Userinterface realisiert werden. Bei dieser ergänzenden manuellen Eingabe handelt es sich allerdings lediglich um eine Option, welche im normalen Prozessablauf nicht zwingend zur Anwendung kommt.

### "4" - Prüfungsdurchführung, Datenübertragung an das System und Validierung sowie Prüfungsberichte

Die Durchführung des eigentlichen Prüfprozesses findet unter Nutzung des Prüfbeleges (konkrete Ausprägung des Formulars auf Basis der Bewegungsdaten) und des digitalen Stiftes statt. Der digitale Stift ist - wie oben erläutert - mit Hilfe des Anoto-Verfahrens in der Lage, die angekreuzten Ergänzungs- bzw. Entscheidungsfelder sowie ggf. die Zusatzinformationen (Status- und/oder Textinformationen) den Eingabefeldern zuzuordnen. Der digitale Stift ist zusätzlich allerdings auch weiterhin als normaler Schreibstift zu verwenden.

Der hiermit abgebildete Prozessablauf liegt somit sehr nahe am bisherigen Prozessablauf ohne direkte IT-Unterstützung wie Barcode-Erfassung mittels Scannung oder dem RFID-Einsatz.

Durch einfache Eingabe auf dem ausgedrucktem Papier - z.B. im Falle der vollständigen und korrekten Prüfung dem Ankreuzen des "o.k." Feldes - werden die Daten im digitalen Stift für die Datenübertragung gespeichert. Durch die Identifizierung des Formulars kann weiterhin ein eindeutiger Bezug zu dem durchgeführten Prüfprozess hergestellt werden.

Die eingesetzten digitalen Stifte des Prüfprozesses können direkt dem Prüfarbeitsplatz zugeordnet werden. Mit der "Entladung" der Stifte werden die Daten an das System übermittelt und stehen dort für die Validierung der Daten zur Verfügung. Durch die standardisierten Schnittstellen können die digitalen Stifte unterschiedlicher Hersteller einfach integriert werden.

Im Rahmen der Validierung erfolgt im System die Prüfung auf Vollständigkeit der Eingaben und auf die tatsächlich realisierte Eingabe. Korrekte Eingaben (Markierung des Ergänzungsfeldes "o.k") werden mit einem entsprechenden Informationsflag an die Datenbank übertragen. In der Datenbank wiederum wird der vollständige Bezug der Prüfprozessinformationen mit den vorauseilenden Informationen hergestellt.

Die Erfahrung zeigt, dass der Prüfprozess großteilig das Ergebnis der vorauseilenden Informationen bestätigt, so dass mit diesem Ablauf ein Minimum an Aktivitäten für den eigentlichen Prüfungsprozess und der damit verbundenen Datenerfassung verbunden ist.

Werden abweichende Ergänzungsinformationen und/oder textliche Zusatzinformationen eingegeben, so werden die geprüften Inhalte mit Abweichungen und/oder Textfeldern an ein Userinterface zur weiteren Bearbeitung weitergegeben. Dort kann dann die tatsächlich auf dem Papier realisierte Eingabe im Pixelformat dargestellt und eine Eingabeleiste mit den geprüften Werten zur Verfügung gestellt werden. Die Eingabeleiste wird mit den geplanten Werten vorbelegt, um eine Korrektur zu vereinfachen.

Weiterhin wird hier eine Verknüpfung zum elektronischen Prüfbeleg geschaffen, so dass der Nutzer bei einer Online-Eingabe auch den vollständigen Beleg ansehen kann. Hiermit entfallen umständliche ergänzende Recherchen. Die Abwicklung wird auf das Minimum der notwendigen Informationen bei bestmöglicher Datenbereitstellung reduziert.

Nach dem Abweichungsreport bzw. den Änderungen werden die geänderten Informationen ebenfalls der zentralen Datenbank zur Verfügung gestellt. Durch die Berichtswesenfunktion können ferner die Ergebnisse des Prüfprozesses mit den dafür geeigneten Kennzahlen über einen Prüfbericht dargestellt werden.

### "5" - Freigabe-Regelwerk

Mit dem Freigabe Regelwerk, bei dem es sich um eine in dem System hinterlegte Regelungsstruktur zur Weiterleitung der gewonnenen Informationen handelt, ist es möglich, die vollständige Freigabe eines Teilprüfprozesses oder des gesamten Prüfprozesses zu steuern. Beispielsweise kann festgelegt werden, dass erst alle Zeilen einer Warenanlieferung eines Lieferanten eines Tages zu validieren sind, bevor diese Daten für einen Folgevorgang verwendet werden können. Ebenfalls ist es beispielsweise möglich, festzulegen, dass erst ein kompletter Prüfprozess vollständig bearbeitet bzw. nachbearbeitet sein muss, bevor die weitere Verarbeitung startet.

Das Regelwerk kann default- bzw. standardmäßig vorgegeben oder vom Nutzer bzw. einer Unternehmenseinheit gesteuert werden. Die Steuerung kann dabei prinzipiell inhaltlichen Aspekten folgen oder einer zeitlichen Steuerung unterliegen.

### "6" - Übertragung der Daten an ein externes zentrales System oder Durchführung einer Datenübertragung

Wie bereits erwähnt wird eine Standardschnittstelle zur Bedienung der externen Systeme bzw. der elektronischen Datenübertragung bereitgestellt. Sind die Daten über das Regelwerk freigegeben, kann die Datenübertragung an ein externes System - z.B. ein SAP-System - erfolgen oder eine elektronische Datenübertragung stattfinden. Die hierzu verwendeten Systeme bzw. konkreten Systemschnittstellen sind nicht Bestandteil der vorliegenden Erfindung und sollen dementsprechend im Folgenden nicht weiter erläutert werden.

Insgesamt gesehen werden also im Rahmen der vorliegenden Erfindung durch die kombinierte Nutzung von vorauseilenden Informationen, dem Einsatz der sog. Anoto-Technologie und dem digitalen Stift sowie geeigneter Softwareprogramme die bestehenden Abläufe der Datenerhebung bei Prüfprozeduren nachhaltig vereinfacht. Eine mehrfache Erfassung von Daten kann bei dem erfindungsgemäßen Verfahren größtenteils entfallen. Ferner ist Verfahren mit standardisierten und einfach bedienbaren Schnittstellen in die bestehende Systemlandschaft integrierbar und damit sehr flexibel.

Die betrieblichen und überbetrieblichen Abläufe von Prüfungen werden sehr einfach und übersichtlich gehalten, so dass diese dem nutzenden Mitarbeiter die bestmöglichen Durchführungserfolge gewährleisten. Die notwendigen Investitionen für die Datenerfassung der Ergebnisse von Prüfprozessen werden auf sehr geringem Niveau gehalten und sind gegenüber bisherigen Verfahren der Datenerhebung (wie z.B. Erfassung über Scanner oder Erfassung über die RFID bzw. Radio Frequency Technologie) deutlich günstiger und praktikabler. Insbesondere wird der einbezogene Nutzer als der entscheidende Faktor bestmöglich unterstützt. Die bestehenden papiergestützten Prüfprozesse können größtmöglich beibehalten werden und werden nur minimal geändert.

Die notwendige manuelle Datenerfassung der Ergebnisse der Prüfprozesse ist auf ein Minimum beschränkt und zwar auf den Abweichungsfall. In diesem Fall lässt sich aufgrund zu ändernder Daten eine Datenerfassung nicht umgehen.

## Patentansprüche

1. Verfahren zur Datenerfassung der Ergebnisse bei Prüfprozessen, wobei das Verfahren die folgenden Schritte aufweist:
a) Bereitstellung eines in Papierform vorliegenden Prüfungsbelegs,
b) Durchführung der Prüfung und Eintragung des Prüfergebnisses auf dem Prüfungsbeleg und
c) Übermittlung der auf dem Prüfungsbeleg eingetragenen Informationen an eine zentrale Einrichtung,
**dadurch gekennzeichnet,**
**dass** der Prüfungsbeleg in Form eines digitalen Papiers erstellt wird und die Prüfergebnisse mit Hilfe eines digitalen Stifts eingegeben werden,
wobei die eingetragenen Informationen über den digitalen Stift an die zentrale Einrichtung übermittelt werden.

2. Verfahren nach Anspruch 1,
**dadurch gekennzeichnet,**
**dass** der Prüfbeleg unter Nutzung von vorauseilenden Informationen erstellt wird.

3. Verfahren nach Anspruch 1 oder 2,
**dadurch gekennzeichnet,**
**dass** der Prüfbeleg auf Basis von vorgefertigten Formular-Vorlagen erstellt wird, welche in der zentralen Einrichtung hinterlegt sind.

4. Verfahren nach einem der vorherigen Ansprüche,
**dadurch gekennzeichnet,**
**dass** der Prüfbeleg den durchzuführenden Prüfungsschritten zugeordnete logische Felder sowie ggf. Ergänzungsfeldern zur Eingabe ergänzender Informationen aufweist.

5. Verfahren nach Anspruch 4,
**dadurch gekennzeichnet,**
**dass** auf dem Prüfbeleg eingetragene ergänzenden Informationen einer automatischen Texterkennung unterzogen werden.

6. Verfahren nach einem der vorherigen Ansprüche,
**dadurch gekennzeichnet,**
**dass** der Prüfbeleg auf Basis der Anoto-Technologie erstellt wird.

7. Verfahren nach einem der vorherigen Ansprüche,
**dadurch gekennzeichnet,**
**dass** die auf dem Prüfungsbeleg eingetragenen Informationen zeitgleich an die zentrale Einrichtung übermittelt werden.

8. Verfahren nach einem der Ansprüche 1 bis 6,
**dadurch gekennzeichnet,**
**dass** die auf dem Prüfungsbeleg eingetragenen Informationen erst zu einem späteren Zeitpunkt an die zentrale Einrichtung übertragen werden.

9. Verfahren nach Anspruch 7 oder 8,
**dadurch gekennzeichnet,**
**dass** die Übertragung der auf dem Prüfungsbeleg eingetragenen Informationen mittel einer drahtlosen Schnittstelle, beispielsweise über Bluetooth erfolgt.

10. Verfahren nach einem der vorherigen Ansprüche,
**dadurch gekennzeichnet,**
**dass** die an die zentrale Einrichtung übermittelten Informationen in dieser ausgewertet und/oder zur weiteren Auswertung an ein externes System übertragen werden.

11. Computersoftware-Programm zur Durchführung des Verfahrens gemäß einem der vorherigen Ansprüche.

12. Computersoftware-Programm nach Anspruch 11,
aufweisend zumindest eine Software-Komponente zur Erstellung, Verwaltung und Ausgabe der Prüfungsbelege.

13. System zur Unterstützung des Verfahren zur Datenerfassung der Ergebnisse bei Prüfprozessen gemäß einem der vorherigen Ansprüche, aufweisend:
eine zentrale Einrichtung mit einer Datenverarbeitungseinrichtung und einer damit verbundenen Ausgabeeinrichtung sowie ein Eingabe- und Erfassungsgerät in Form eines digitalen Stifts,
wobei die zentrale Einrichtung dazu ausgebildet ist, Prüfungsbelege zu erstellen und über die Ausgabeeinrichtung auszugeben,
und wobei der digitale Stift dazu ausgebildet ist, auf den Prüfungsbelegen eingetragene Informationen zu erfassen und an die zentrale Einrichtung zu übermitteln.
